# EUROPÄISCHE PATENTSCHRIFT

(11) **EP 1 240 467 B1**
(45) Veröffentlichungstag und Bekanntmachung des Hinweises auf die Patenterteilung: **24.10.2007**
(21) Anmeldenummer: 00971404.9
(22) Anmeldetag: 31.10.2000
(51) Int. Cl.: F25D 21/08, H05B 3/06, H05B 3/56

(54) **KÄLTEGERÄT**
REFRIGERATION DEVICE
APPAREIL REFRIGERANT

(30) Priorität: 01.12.1999 DE 19957807
(43) Veröffentlichungstag der Anmeldung: 18.09.2002
(73) Patentinhaber: BSH Bosch und Siemens Hausgeräte GmbH, 81739 München (DE)
(72) Erfinder: RAAB, Alfred, 73460 Hüttlingen (DE)
(86) Internationale Anmeldenummer: PCT/EP2000/010758
(87) Internationale Veröffentlichungsnummer: WO 2001/040722

(56) Entgegenhaltungen:
- DE-A- 938 737
- DE-A- 1 601 038
- DE-A- 3 242 073
- FR-A- 2 683 419
- US-A- 3 800 068
- US-A- 4 097 096
- US-A- 4 461 529
- US-A- 5 030 135

## Beschreibung

Die Erfindung betrifft ein Kältegerät mit einer von flexiblem Werkstoff ummantelten elektrischen Heizleitung, welche wenigstens einen auf einer Leitungsseele aufgebrachten Widerstandsdraht aufweist und welche zumindest über die Länge ihres Heizbereiches innerhalb eines Schutzrohres aus wärmeleitendem Material verläuft, wobei das Schutzrohr an seinen beiden Enden anhand von Übergangselementen mit der Heizleitung verbunden ist. Ein ähnliches Kältegerät ist aus der DE-A-160 10 38 bekannt.

Bei Kältegeräten kommen vielfach elektrische Widerstandsheizungen zur Anwendung, welche beispielsweise bei Zwei-Temperatur-Kältegeräten mit einem EinKreis-Kältesystem zum sog. Gegenheizen in den Kühlfächern Einsatz finden oder zum Abtauen der Verdampfer bei Nofrost-Kältegeräten angewandt werden oder als Heizungen zum Vermeiden von Betauungen beispielsweise im Türöffnungsbereich der Kältegeräte eingesetzt sind. Bei diesen Anwendungsfällen verläuft die elektrische Heizleitung im Bereich ihres Heizabschnittes innerhalb einem metallenen Schutzrohr, um die Wärmeverteilung der elektrischen Widerstandsheizung zu verbessern. Zur Fixierung des Schutzrohres auf der Heizleitung ist es sowohl bekannt, das Schutzrohr und die Heizleitung im Austrittsbereich aus dem Schutzrohr mit Schrumpfschläuchen in zwei übereinander liegenden Lagen zu verbinden als auch das Schutzrohr im Austrittsbereich der Heizleitung mit hartem Kunststoff zu umspritzen und somit eine Verbindung zwischen beiden zu erreichen. Beiden Lösungen haftet der Nachteil an, daß es vorkommen kann, daß die flexible Heizleitung im Rahmen ihrer Montage an einem Kältegerätkorpus leicht abknickt und somit beschädigt werden kann. Im Falle der Schrumpfschläuche ist die Abknickstelle durch das Schutzrohr und im Falle der Kunststoffumspritzung mit hartem Kunststoff durch den Austritt der Heizleitung aus dem Kunststoffteil gebildet.

Der Erfindung liegt die Aufgabe zugrunde, bei einem Kältegerät gemäß dem Anspruch 1 mit einfachen konstruktiven Maßnahmen die Nachteile des Standes der Technik zu vermeiden.

Diese Aufgabe wird mit den Merkmalen des Anspruchs 1 gelöst.

Mit Hilfe eines Übergangselementes, bei welchem ein biegesteifer und ein biegeschlaffer Abschnitt zu einer Einheit kombiniert ist, dient der biegesteife Abschnitt zur Halterung und Fixierung der elektrischen Heizleitung in der dafür vorgesehenen Position zu dem aus wärmeleitendem Material wie Metall oder dergleichen gebildeten Schutzrohr. Der sich unmittelbar an den biegesteifen Abschnitt anschließende biegeschlaffe Abschnitt vermeidet durch seine biegsame Führung und durch die Erzeugung eines kontinuierlichen Übergangs für die elektrische Heizleitung hin zu dem biegesteifen Abschnitt ein Abknicken der Heizleitung und damit z. B. eine Beschädigung dieser während ihrer Montage in einem Kältegerätegehäuse.

Nach einer bevorzugten Ausführung des Gegenstandes der Erfindung ist vorgesehen, daß der biegeschlaffe Abschnitt durch eine Wandungsformgebung des Übergangselementes gebildet ist.

Die Schaffung eines biegeschlaffen Abschnitts durch eine entsprechend konstruktive Ausgestaltung seiner Wandung ist eine Vielzahl von Abstufungsmöglichkeiten für die Fexibilität und damit der Formsteifigkeit dieses Abschnitts eröffnet, wodurch dieser Abschnitt besonders zielgerichtet an die unterschiedlichen Ausführungsformen von Heizleitungen anpaßbar und somit deren Beschädigung durch Abknicken mit sehr hoher Wahrscheinlichkeit ausgeschlossen ist.

Auf besonders einfache Weise läßt sich ein biegeschlaffer, flexibler Abschnitt schaffen, wenn nach einer nächsten bevorzugten Ausführungsform des Gegenstandes der Erfindung vorgesehen ist, daß die Wandungsformgebung zumindest annähernd in Art eines Faltenbalgs ausgebildet ist.

Besonders gezielt örtlich herbeiführen läßt sich die biegeschlaffe Eigenschaft, wenn nach einer weiteren bevorzugten Ausführungsform des Gegenstandes der Erfindung der Erfindung vorgesehen ist, daß der Faltenbalg mit einer Lochstruktur versehen ist.

Besonders vorteilhaft ausgebildet ist die Lochstruktur, wenn nach einer nächsten vorteilhaften Ausgestaltung des Gegenstandes der Erfindung vorgesehen ist, daß die Lochstruktur zumindest annähernd gitterähnlich ausgebildet ist.

Besonders kostengünstig und positionsgenau anbringbar ist das Übergangselement zwischen dem Heizrohr und dem Austrittsbereich der elektrischen Heizleitung aus diesem, da gemäß der Erfindung vorgesehen ist, daß das Übergangselement durch Umspritzen mit Kunststoff erzeugt ist. Durch den Umspritzvorgang ist mit Hilfe des biegesteifen Abschnitts die Heizleitung zu dem Schutzrohr infolge des Aufschrumpfens des umspritzten Kunststoffes positionsgenau fixiert. Darüber hinaus ist die Herstellung eines Übergangselements durch Umspritzen besonders in der Großserienfertigung besonders kostengünstig, wobei gleichzeitig ein hoher Qualitätsstandard erreicht ist. Ferner ist durch die Kombination des an sich bekannten biegesteifen Abschnitts mit einem biegeschlaffen Abschnitt die Möglichkeit eröffnet, ein bereits vorhandenes zur Herstellung des bekannten biegesteifen Abschnitts dienendes Kunststoffspritz-Werkzeug durch eine verhältnismäßig einfache und kostengünstige Werkzeugergänzung für den biegeschlaffen Abschnitt weiterverwenden zu können.

Nach einer letzten bevorzugten Ausführungsform des Gegenstandes der Erfindung ist vorgesehen, daß der Kunststoff zum Umspritzen aus Polyethylen gebildet ist.

Durch den Einsatz von Polyethylen ist im Hinblick auf das einstückige, zwei hinsichtlicher seiner Eigenschaften unterschiedliche Abschnitte aufweisende Übergangselement eine besonders kostengünstige Kunststoffvariante bereitgestellt, welche zugleich für die Ausbildung des biegesteifen sowie für Ausbildung des biegeschlaffen Abschnittes vorteilhafte Eigenschaften besitzt.

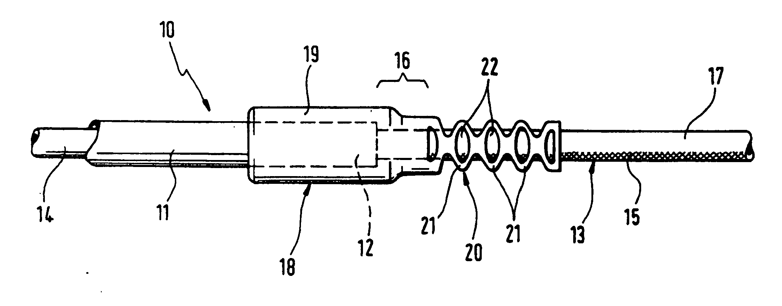

Ein Ausführungsbeispiel der Erfindung ist in der nachfolgenden Beschreibung anhand der Zeichnung erläutert.

Die einzige Figur zeigt ein im Austrittsbereich einer Heizleitung aus einem Schutzrohr angebrachtes Übergangselement in Ansicht von der Seite.

Gemäß der einzigen Figur ist eine bei einem nicht gezeigten Kältegerät zur Anwendung kommende Heizeinrichtung 10 gezeigt, welche beispielsweise zum Abtauen eines bei Nofrost-Kältegeräten zum Einsatz kommenden Lamellenverdampfers oder zur Vermeidung von Betauungen im Bereich der Zugangsöffnung eines Kältegerätes Anwendung findet. Die Heizeinrichtung 10 besitzt ein aus wärmeleitendem Werkstoff wie Aluminium, Kupfer oder dergleichen gebildetes Schutzrohr 11 mit Rohrenden 12 (Nur eine davon ist dargestellt). Innerhalb des eine günstigere Wärmeverteilung für die Heizeinrichtung 10 bewirkenden Schutzrohres 11 verläuft eine flexible Heizleitung 13. Diese besitzt einen im Schutzrohrbereich 11 liegenden Heizabschnitt 14 und einem außerhalb des Schutzrohres 11 liegenden Kaltleiterabschnitt 15, dessen dem Heizabschnitt 14 zugewandtes Ende mit dessen Endabschnitt einen Austrittsbereich 16 für die aus dem Schutzrohr 11 austretende Heizleitung 13 bildet. Diese besitzt einen auf eine nicht gezeigte Leitungsseele aufgewickelten, ebenso nicht dargestellten Widerstandsdraht, welcher zusammen mit der Leitungsseele von einer beispielsweise durch Silikon gebildeten flexiblen Kunststoffschicht 17 ummantelt ist.

Die Heizleitung 13 ist mit Hilfe eines Übergangselementes 18 bezüglich des Schutzrohres 11 lagefixiert. Zu diesem Zweck besitzt das beispielsweise aus Polyethylen hergestellte, durch Kunststoffumspritzen des Schutzrohres 11 einerseits und der Heizleitung 13 andererseits erzeugte Übergangselement 18 einen biegesteifen Halteabschnitt 19, welcher sich über den Endabschnitt 12 des Schutzrohres 11 bis in den Austrittsbereich 16 erstreckt. An den Halteabschnitt 19 schließt sich einstükkig ein mit an den biegesteifen Halteabschnitt 19 mitangespritzter biegeschlaffer Führungsabschnitt 20 an, dessen Flexibilität durch eine im vorliegenden Fall in Form eines Faltenbalgs ausgebildete Wandungsformgebung erreicht ist. Der in Form eines Faltenbalgs ausgebildete Führungsabschnitt 20 besitzt mehrere hintereinander angeordnete Falten 21, welche zur Verbesserung der Flexibilität des Führungsabschnittes 20 mit lochähnlich ausgestalteten Durchbrüchen 22 versehen sind, deren Anordnung über die Länge des Führungsabschnittes 20 eine Lochstruktur bildet.

Durch die flexible, biegeschlaffe Ausführung des Führungsabschnittes 20 ist ein kontinuierlich weicher Übergang zu dem als Halte- und Fixiermaßnahme dienender Halteabschnitt 19 geschaffen, wodurch ein zur Beschädigung der Heizleitung 13 führendes Abknicken an der Austrittsstelle der Heizleitung 13 aus dem Halteabschnitt 19 verhindert.

## Patentansprüche

1. Kältegerät mit einer von flexiblem Werkstoff ummantelten elektrischen Heiz leitung für eine Abtauheizung oder dergleichen, welche wenigstens einen auf einer Leitungsseele aufgebrachten Widerstandsdraht aufweist und welche zumindest über die Länge ihres Heizbereiches innerhalb eines Schutzrohres aus wärmeleitendem Material verläuft, wobei das Schutzrohr an seinen beiden Enden anhand von Übergangselementen mit der Heizleitung verbunden ist, welche einen biegesteifen Abschnitt (19) und einen biegeschlaffen zur beigsamen Führung für die elektrische Heizleitung (13) dienenden Abschnitt (20) besitzen, wobei der biegesteife Abschnitt (19) zumindest den Endabschnitt (12) des Schutzrohres (11) mit dem daraus austretenden Teil (16) der Heizleitung (13) verbindet und auf seinem vom Schutzrohr (11) abgewandten Ende mit dem biegeschlaffen Abschnitt (20) verbunden ist, **dadurch gekennzeichnet, daß** das Übergangselement (18) durch Kunststottumspritzen des Schutzrohres (11) und der Heizleitung (13) im Austrittsbereich (16) der Heizleitung (13) aus dem Schutzrohr (11) erzeugt ist.

2. Kältegerät nach Anspruch 1, **dadurch gekennzeichnet, daß** der Kunststoff zum Umspritzen des Schutzrohres (11) und der Heizleitung (13) aus Polyethylen gebildet ist.

3. Kältegerät nach Anspruch 1, **dadurch gekennzeichnet, daß** der biegeschlaffe Abschnitt (20) durch eine Wandungsformgebung des Übergangselementes (18) gebildet ist.

4. Kältegerät nach Anspruch 3, **dadurch gekennzeichnet, daß** die Wandungsformgebung zumindest annähernd in Art eines Faltenbalgs ausgebildet ist.

5. Kältegerät nach Anspruch 4, **dadurch gekennzeichnet, daß** der Faltenbalg mit einer Lochstruktur versehen ist.

6. Kältegerät nach Anspruch 5, **dadurch gekennzeichnet, daß** die Lochstruktur zumindest annähernd gitterähnlich ausgebildet ist.

## Claims

1. Refrigerating appliance with an electrical heating line, which is encased by flexible material, for a defrosting heating or the like, which comprises at least one resistance wire mounted on a conductor core and which extends at least over the length of its heating region within a protective tube of thermally conductive material, wherein the protective tube is connected at its two ends with the heating line by way of transition elements, which have a section (19) stiff in bending and a section (20) which is slack in bending and serves for flexible guidance for the electrical heating line (13), wherein the section (19) stiff in bending connects at least the end section (12) of the protective tube (11) with the part (16), which issues therefrom, of the heating line (13) and is connected at its end, which is remote from the protective tube (11), with the section (20) slack in bending, **characterised in that** the transition element (18) is produced by injection-moulding around of the protective tube (11) and the heating line (13) with synthetic material in the outlet region (16) of the heating line (13) from the protective tube (11).

2. Refrigerating appliance according to claim 1, **characterised in that** the synthetic material for injection-moulding around the protective tube (11) and the heating line (13) is formed from polyethylene.

3. Refrigerating appliance according to claim 1, **characterised in that** the section (20) slack in bending is formed by a wall-shaping of the transition element (18).

4. Refrigerating appliance according to claim 3, **characterised in that** the wall shaping is formed at least approximately in the manner of a bellows.

5. Refrigerating appliance according to claim 4, **characterised in that** the bellows is provided with a perforated structure.

6. Refrigerating appliance according to claim 5, **characterised in that** the perforated structure is formed to be at least approximately similar to a grid.

## Revendications

1. Appareil frigorifique comprenant une conduite de chauffage électrique enveloppée de matériau flexible pour une conduite de dégel ou similaire, qui présente au moins un fil de résistance appliqué sur une âme de conduite et qui est agencée au moins sur la longueur de sa zone de chauffage à l'intérieur d'un tuyau de protection à base de matériau thermoconducteur, le tuyau de protection étant relié sur ses deux extrémités à l'aide d'éléments de transition à la conduite de chauffage, qui présentent une partie (19) rigide en flexion et une partie (20) souple en flexion, servant au guidage souple pour la conduite de chauffage (13) électrique, la partie (1) rigide en flexion reliant au moins la partie d'extrémité (12) du tuyau de protection (11) à la partie (16) qui en sort de la conduite de chauffage (13) et est réliée sur son extrémité opposée au tuyau de protection (11) à la partie (20) souple en flexion, **caractérisé en ce que** l'élément de transition (18) est généré par enrobage en plastique du tuyau de protection (11) et de la conduite de chauffage (13) dans la zone de sortie (16) de la conduite de chauffage (13) du tuyau de protection (11).

2. Appareil frigorifique selon la revendication 1, **caractérisé en ce que** le plastique pour l'enrobage du tuyau de protection (11) et de la conduite de chauffage (13) est formé à base de polyéthylène.

3. Appareil frigorifique selon la revendication 1, **caractérisé en ce que** la partie (20) souple en flexion est formée par un formage de paroi de l'élément de transition (18).

4. Appareil frigorifique selon la revendication 3, **caractérisé en ce que** le formage de paroi est conçu au moins approximativement à la façon d'un soufflet.

5. Appareil frigorifique selon la revendication 4, **caractérisé en ce que** le soufflet est doté d'une structure à trous.

6. Appareil frigorifique selon la revendication 5, **caractérisé en ce que** la structure à trous est conçue au moins approximativement en forme de grille.
